# EUROPÄISCHE PATENTSCHRIFT

(11) **EP 1 210 221 B1**
(45) Veröffentlichungstag und Bekanntmachung des Hinweises auf die Patenterteilung: **01.10.2003**
(21) Anmeldenummer: 00960474.5
(22) Anmeldetag: 17.08.2000
(51) Int. Cl.: B29C 59/02

(54) **VERFAHREN ZUM HERSTELLEN EINER STRUKTURIERTEN OBERFLÄCHE**
METHOD FOR THE PRODUCTION OF A STRUCTURED SURFACE
PROCEDE POUR LA PRODUCTION D'UNE SURFACE STRUCTUREE

(30) Priorität: 10.09.1999 DE 19943299
(43) Veröffentlichungstag der Anmeldung: 05.06.2002
(73) Patentinhaber: Gottlieb Binder GmbH & Co., 71088 Holzgerlingen (DE)
(72) Erfinder: SCHULTE, Axel, 71088 Holzgerlingen (DE); TUMA, Jan, 12681 Berlin (DE)
(74) Vertreter: Patentanwälte Bartels und Partner
(86) Internationale Anmeldenummer: EP0008034
(87) Internationale Veröffentlichungsnummer: WO01019597

(56) Entgegenhaltungen:
- EP-A- 0 933 388
- WO-A-96/04123

## Beschreibung

Die Erfindung betrifft ein Verfahren zur Herstellung einer Oberfläche für einen Gegenstand gemäß den Merkmalen des Oberbegriffes des Patentanspruches 1

Aus der DE 35 24 653 C2 sind Oberflächen in Form von geprägten, biaxial gestreckten Folien zur Bildung eines durchbrochenen netzartigen Tuchs als Gegenstand mit Öffnungen und Strängen bekannt, wobei erhabene Bereiche als eine Art einer Erhebung abgeflacht und deformiert werden, was zu einem Strangversatz innerhalb der Tuchstruktur führt. Eine dahingehend bekannte Lösung führt bei der Herstellung von durchbrochenen Netztüchern durch Prägen einer Folie aus thermoplastischen Polymeren zu verbesserten Eigenschaften hinsichtlich ihrer Griffigkeit und bei entsprechender Nachbehandlung zu einer Reduzierung von unerwünschten Glanzeffekten des Materials.

Weiter sind durch die EP 0 772 514 β1 selbstreinigende Oberflächen von Gegenständen bekannt, die eine künstliche Oberflächenstruktur aus Erhebungen und Vertiefungen einer Art aufweisen, wobei der Abstand zwischen den Erhebungen im Bereich von 5 bis 200 µm und die Höhe der Erhebungen im Bereich von 5 bis 100 µm liegen. Zusätzlich sollen dabei zumindest die Erhebungen aus hydrophoben Polymeren oder haltbar hydrophobierten Materialien bestehen und die Erhebungen nicht durch Wasser oder durch Wasser mit Detergenzien ablösbar sein.

Die diesbezüglich bekannte Lösung zeigt eine Oberfläche mit diesen Erhebungen zur Abweisung von Verschmutzungen, wobei künstlich eine Lotusblatt-Struktur nachgebildet wird, von der es bekannt ist, daß sie im Sinne eines Selbstreinigens nicht verschmutzt, und sogar handelsübliche Klebstoffe von der biologischen Struktur abgewiesen werden. Trotz beachtlicher Resultate hinsichtlich eines Selbstreinigungseffektes sind die dahingehend bekannten Oberflächen nur begrenzt einsetzbar, da entweder der Bereich der bei der Herstellung zu verwendenden Materialien stark eingeschränkt ist oder die Oberfläche im Sinne einer Hydrophobierung aufwendig nachbearbeitet werden muß. Außerdem ist die bekannte Oberfläche nur aufwendig und kompliziert herstellbar. Zur Herstellung der bekannten Oberfläche werden Beschichtungsverfahren oder formgebende Verfahren mit Highmeshsieben angegeben, die kostenintensiv und schwierig zu beherrschen sind. Auch hat sich in der Praxis gezeigt, daß derart künstlich hergestellte Oberflächen mit "Lotus-Effekt" oft nicht die gewünschten Resultate erzielen.

Schließlich ist aus der PCT/WO 93/01047 eine aus einem tiefgeprägten, thermoplastischen Film bestehende Oberfläche bekannt. Diese weist eine Vielzahl von Makrozellen als erste Erhebungen auf, welche durch Gebiete verbunden werden, die sich zwischen diesen benachbarten Makrozellen erstrecken, wobei die Makrozellen eine Tiefe von 0,635 bis 3,81 mm aufweisen und zusätzlich der thermoplastische Film wenigstens eine Vielzahl von Mikroeindrücken aufweist, die mit einem Abstand zwischen 1,25 und 6,35 µm ein zufällig verteiltes Sandstrahlmuster auf dem Film ausbilden. Diese Mikroeindrücke bilden eine zweite Art von Erhebungen aus, die zu den Erhebungen der ersten Art eine entgegengesetzte Orientierung aufweisen, so daß die Erhebungen nach Arten voneinander getrennt auf gegenüberliegenden Seiten der Oberfläche angeordnet sind. Derartig bekannte Oberflächen, etwa polyolefinische Folien, wie solche aus Polyethylen, mit sich zwischen ihnen erstreckenden Gebieten erhabenen Erhebungen werden insbesondere dort eingesetzt, wo an solche Gewebe besondere Anforderungen hinsichtlich fühlender oder sehender Sinneswahrnehmungen gestellt werden, also etwa im Bereich von Bekleidungsfuttern oder dem Hygiene- oder Sanitärbereich, und weisen keine schmutzabweisenden Eigenschaften auf, so daß ein Selbstreinigungseffekt hier nicht nachweisbar ist.

Durch die EP 0 933 388 A2 ist eine strukturierte Oberfläche mit hydrophoben und/oder oleophoben Eigenschaften bekannt mit niedrigen Oberflächenenergien. Die bekannten Oberfiächen weisen mit Wasser große Randwinkel auf und werden von Wasser nur schwer benetzt und besitzen daher einen Selbstreinigungseffekt. Um dies zu erreichen wird eine künstlich herstellbare Grundstruktur mit zwei verschiedenen Arten von Erhebungen versehen, wobei eine Art kleinerer Erhebungen auf einer Überstruktur angebracht sind, in Form von geometrisch größeren Erhebungen, die benachbart unmittelbar aneinander anstoßen. Zum Herstellen der bekannten Erhebungen und der Überstruktur als einer weiteren Art an Erhebungen werden diese gleichzeitig oder nacheinander mechanisch in das Oberflächen material eingeprägt, durch lithographische Verfahren eingeätzt oder durch formgebende Verarbeitung aufgebracht oder gießtechnisch erhalten. Bei dem mechanischen Einprägeverfahren wird von der Rückseite her auf die Oberfläche entsprechend eingewirkt, die auf ihrer gegenüberliegenden Seite dann die genannten zwei Arten an Erhebungen ausformt. Beim Einätzen der Struktur in das Oberflächenmaterial ist zumindest teilweise mit dessen Schädigung durch das Ätzmittel zu rechnen. Bei dem formgebenden Aufbringverfahren wird zunächst die jeweilige Erhebungsstruktur über eine Auftragswalze auf das Oberflächenmaterial aufgebracht. Das letztgenannte Verfahren ist aufwendig und kostenintensiv und es ist nicht sichergestellt, daß in Abhängigkeit der Beanspruchung die derart aufgebrachte Struktur sich vom Grundmaterial nicht wieder löst. Die bekannten Gieß-, Einpräge-, Einätz- und Aufbringverfahren sind darüber hinaus nicht geeignet im großtechnischen Maßstab die Herstellung großer Mengen an strukturierten Oberflächen zur Verfügung zu stellen.

Ausgehend von diesem Stand der Technik liegt der Erfindung die Aufgabe zugrunde, die bekannten Verfahren zum Herstellen von künstlichen Oberflächen mit zwei verschiedenen Arten an Erhebungen dahingehend weiter zu verbessern, daß sie kostengünstig realisierbar sind, in dem fertigungstechnisch rationell große Mengen an Oberflächen zur Verfügung gestellt werden können und dennoch die Oberfläche insbesondere einen sehr guten Abreinigungsgrad für Verschmutzungen aufweist. Eine dahingehende Aufgabe löst ein Verfahren zur Herstellung der dahingehenden Oberfläche mit den Merkmalen des Anspruches 1.

Dadurch, daß gemäß dem kennzeichnenden Teil des Patentanspruches 1 die Oberfläche mittels einer Strukturwalze als Folien- oder Bandmaterial fortlaufend hergestellt wird, die mit der ersten und zweiten Art von Erhebungen entsprechenden Vertiefungen versehen wird, in die die künstlich herstellbare Grundstruktur für ihre Formgebung eintritt, ist ein Formgebungsverfahren realisiert bei dem die Erhebungen der ersten und zweiten Art in den Vertiefungen der Strukturwalze sich abbilden und derart erhalten werden. Mit dem dahingehenden Verfahren, mittels einer Formgebungsstrukturwalze in deren Vertiefungen die konvexen Erhebungen auszuformen, lassen sich die schmutzabweisenden Oberflächen fertigungstechnisch rationell und kostengünstig in großen Mengen zur Verfügung stellen.

Vorzugsweise bildet dabei die Strukturwalze, insbesondere mit einer weiteren Gegenhaltewalze einen Formgebungsspalt aus, durch den das Kunststoffmaterial durchtritt. In Abhängigkeit von der Breite und dem Durchmesser der Strukturwalze lassen sich die gewünschten Oberflächen in beliebigen Längen und Breiten herstellen und sofern die Gegenwalze als Formwalze mit einer vergleichbaren Struktur wie die Strukturwalze ausgebildet ist, läßt sich auch beidseitig die gewünschte Mikrooberflächenstruktur erzielen. Die künstlich herstellbare Grundstruktur dringt also für ihre Formgebung in die Oberfläche der Strukturwalze ein und verläßt dann als Fertigprodukt unmittelbar die Strukturwalze. Durch den Einsatz von hydrophilem Kunststoffmaterial für die Grundstruktur läßt sich darüber hinaus ein verbesserter Schmutzabweisungsgrad erreichen als mit den bekannten hydrophilen und/oder oleophoben Strukturen.

Bei einer Vorrichtung zum Durchführen des erfindungsgemäßen Verfahrens sind die Vertiefungen für die Strukturwalze durch ein Sandstrahlverfahren erhalten, bei dem mit einem Strahlgut größeren Durchmessers und einem kleineren Durchmessers die Vertiefungen für die erste Art bzw. zweite Art an Erhebungen gebildet sind, oder bei dem das Strahlgut an seiner Kornoberfläche mit Überständen versehen ist, die die Vertiefungen für die Erhebungen der ersten Art bilden. Die dahingehenden Sandstrahlverfahren sind sehr kostengünstig und bieten die notwendige Genauigkeit für die späteren Erhebungsstrukturen der strukturierten Oberfläche. Die derart erhaltene künstliche gestellte Grundstruktur findet ihre Entsprechungen in der Natur, beispielsweise bei den Blättern der Kapuzinerkresse. Frühere Untersuchungen haben ergeben, daß die Kapuzinerkresse im Hinblick auf ihre Blätter eine extrem feine Ultrastruktur aufweist mit Strukturelementen in Form von Erhebungen, die kleiner als 2 µm sind. Derartige Oberflächenstrukturen, die in ihren Details nicht bekannt waren (vgl. EP 0 772 514 B1, Spalte 1, Zeilen 4ff), wurden als künstlich nicht herstellbar angesehen und im Hinblick auf ihre mechanische Widerstandsfähigkeit als extrem empfindlich und mithin für praktische Belange als ungeeignet bezeichnet. Als einfacher wurde es demgegenüber in der Fachwelt angesehen, als natürliche Vorlage die Lotusblattstruktur nachzuempfinden. Es ist mithin für die Fachwelt überraschend, daß es gelungen ist, zum einen die extrem feine Ultrastruktur des biologischen Vorbildes Kapuzinerkresse zu erfassen und zum anderen diese künstlich nachzubilden und in ein Produkt weiter zu entwikkein, das zum einen sehr gute schmutzabweisende Eigenschaften hat und dennoch unerwartet die für ein Produkt notwendige mechanische Stabilität mit sich bringt.

Die Grundstruktur der Oberfläche zeichnet sich gegenüber einer glatten Lotusblattstruktur, auf der die Erhebungen vorstehend angeordnet sind, dadurch aus, daß die Grundstruktur nicht eben ist, sondern konvexe Erhebungen ausbildet, auf denen wiederum die kleineren Erhebungen als integraler Bestandteil aufgesetzt sind. Derartig strukturierte Oberflächen zeichnen sich dahingehend auch gegenüber den aus der PCTAVO 93/01047 und DE 35 24 653 C2 bekannten Folien aus. Dadurch, daß die erste Art von Erhebungen mit einer konvexen Krümmung von der Grundstruktur der Oberfläche absteht, wird im Gegensatz zu einer glatten Struktur eine erheblich vergrößerte Fläche zum Aufbringen einer zweiten Art von Erhebungen zur Verfügung gestellt. Trotz der Bedenken in der Fachwelt, läßt sich eine solche Oberfläche rationell bei geringen Kosten in großen Flächenmengen herstellen, wobei die derart hergestellte Oberfläche mechanisch stabil ist, auch bei entsprechend hohen Beanspruchungen der Oberfläche oder Grundstruktur. Dadurch, daß die Erhebungen der ersten Art bei der Oberfläche derartig benachbart zueinander angeordnet sind, daß die benachbarten Erhebungen der ersten Art abstandsfrei aneinanderstoßen und sie zudem deutlich kleiner ausfallen, als die beanspruchten Größenordnungen bei der Lotusblattlösung nach der EP 0 772 514 B1, ist gegebenenfalls auch ein verbessertes Abweisungsverhalten gegenüber Schmutzpartikeln gegeben, da sich diese nicht ohne weiteres zwischen die Erhebungen auf der Grundstruktur setzen können.

Vorzugsweise werden als hydrophile Kunststoffmaterialien für die Grundstruktur Polyvinylchlorid, Polyterephthalate, Polymethylmethacrylat oder Polyamide eingesetzt.

Dadurch, daß bei der Oberfläche die zweite Art zapfenartig von der ersten Art von Erhebungen vorsteht und daß die jeweilige Erhebung der zweiten Art eine Höhe kleiner als 5 µm bzw. zwischen 1,5 und µm aufweist und daß der Abstand zwischen den Erhebungen der zweiten Art ebenfalls kleiner als 5 µm, vorzugsweise 1 bis 3 µm, ist, läßt sich eine mikrostrukturierte Oberfläche schaffen, die gegebenenfalls geeignet ist für den Einsatz bei Haftverschlüssen, wo Verhakungselemente zweier Verschlußteile miteinander zusammenwirken oder Verhakungselemente eines Verschlußteils mit Schlaufenmaterial eines anderen.

Die Oberfläche läßt sich insbesondere für Gegenstände verwenden, um deren ungewollte Verschmutzung zu verhindern, indem die angesprochenen Erhebungen der ersten Art abstandsfrei benachbart angeordnet sind, so daß auf die Oberfläche auftretende Verschmutzungspartikel durchschnittlicher Größe sich nicht zwischen den Erhebungen anlagern können. Des weiteren kann die Oberfläche einer Strömung ausgesetzt werden, beispielsweise einer Luft- oder Wasserströmung, so daß in der Strömungshauptrichtung es aufgrund der Erhebungen zu Turbulenzen kommt, wobei es überraschend zu einer Verminderung der Wandreibung kommt. Dahingehende Oberflächen mit Rippenstrukturen sind für diesen Zweck im Stand der Technik (vgl. beispielsweise EP 0 846 617 A2) nachweisbar.

Im folgenden wird die Oberfläche anhand einer Ausführungsform nach der Zeichnung näher erläutert sowie nähere Angaben zu ihrer Herstellung und ihrer Verwendung gemacht. Es zeigen in prinzipieller und nicht maßstäblicher Darstellung die
- Fig.1: einen Ausschnitt aus der Oberfläche in seitlicher Ansicht;
- Fig.2: eine Draufsicht auf die Oberflächenanordnung nach der Fig.1;
- Fig.3: in perspektivischer Ansicht die Strukturwalze zum Herstellen der Oberfläche nach den Fig.1 und 2 mit einem vergrößerten Ausschnitt betreffend ihre Vertiefungsstruktur.

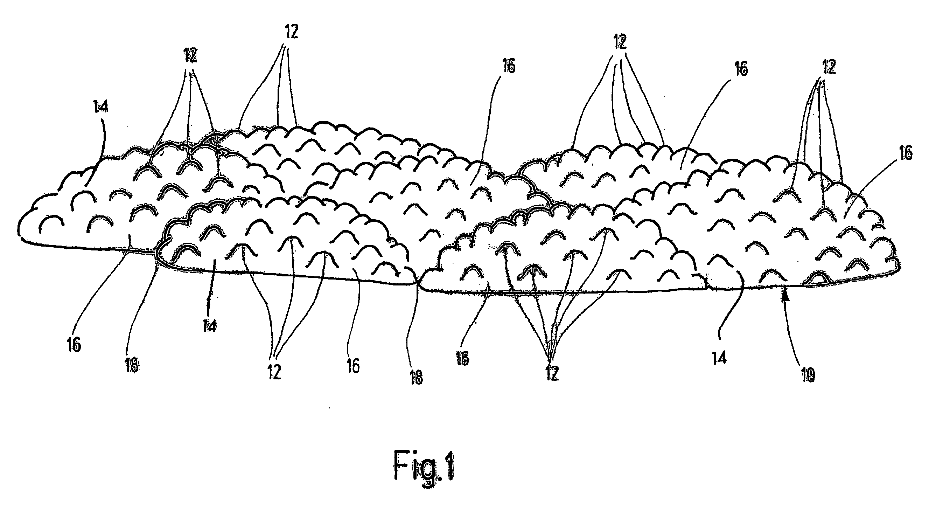

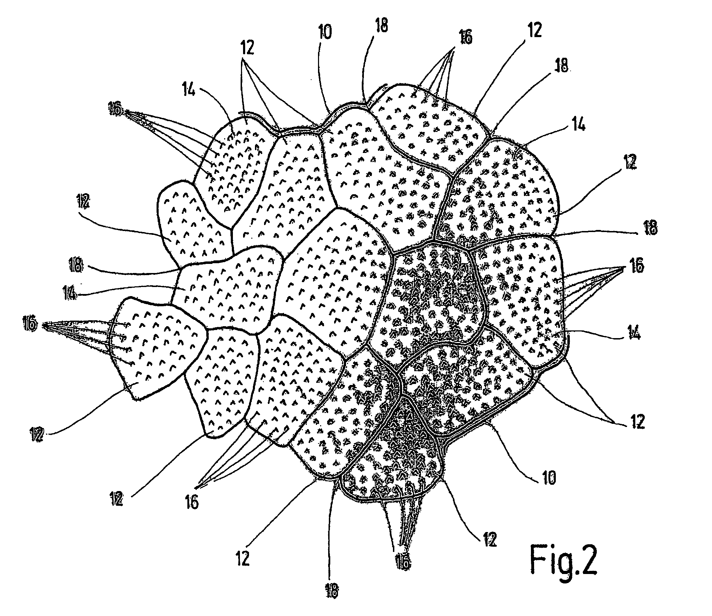

Die in den Fig. 1 und 2 gezeigte Oberfläche für eine nicht nähe spezifizierten Gegenstand weist eine künstlich herstellbare Grundstruktur 10 auf, bei der von einer abstandsfrei aneinanderstoßenden benachbarten ersten Art von Erhebungen 12 eine zweite Art von Erhebungen 16 absteht, wobei durch die erste Art von Erhebungen 12 Bereiche 14 (Fig.2) einer zweiten Art von Erhebungen 16 gegeneinander abgegrenzt sind. Die dahingehende erste Art von Erhebungen 12 ist gegenüber der Grundstruktur 10 konvex erhaben ausgebildet und bildet, wie die Fig.1 dies zeigt, für sich gesehen abgeschlossene Hügel aus. Bei der Betrachtung der Fig. 1 und 2 ist zu beachten, daß es sich bei den angesprochenen Erhebungen um Mikrostrukturen handelt und demgemäß die Darstellung stark vergrößert den wirklichen Sachverhalt wiedergibt und auch stark vereinfacht. Insbesondere sind die Abstände zwischen den Erhebungen nur prinzipiell dargestellt, um den Sinn der Erfindung zu verdeutlichen. Wie die Fig.1 und 2 des weiteren zeigen, sind die Erhebungen 16 der zweiten Art auf der ersten Art von Erhebungen 12 und mithin auf einer gemeinsamen, dem Gegenstand abgewandten Seite angeordnet und integraler Bestandteil der Erhebungen 12, mit denen sie einstückig verbunden sind.

Die Grundstruktur 10 ist aus einem Kunststoffmaterial gebildet, vorzugsweise aus einem hydrophilen Kunststoffmaterial, wie Polyvinylchlorid, Polyterephthalate, Polymethylmethacrylat oder Polyamid. Wie die Fig.1 und 2 des weiteren zeigen, steht die zweite Art von Erhebungen 16 zapfenartig von der ersten Art von Erhebungen 12 vor, wobei die jeweilige Erhebung 16 der zweiten Art eine Höhe kleiner als 5 µm, vorzugsweise zwischen 1,5 und 3 µm aufweist, wobei der Abstand zwischen den Erhebungen 16 der zweiten Art ebenfalls kleiner als 5 µm, vorzugsweise 1 bis 3 µm ist. Die angesprochene Höhe wird dabei gemessen vom Fuß bis zum Scheitelpunkt einer jeden Erhebung 16 und der Abstand der Erhebungen 16 untereinander ist der mittlere Abstand zwischen den Außenumfängen der Erhebungen 16. Wie sich insbesondere aus der Fig.2 ergibt, besetzt die jeweils konvex ausgebildete Erhebung 12 der ersten Art eine Fläche auf der Grundstruktur 10 zwischen 20 und 300 µm² und die Höhe zwischen der Grundstruktur 10 und der Scheitelhöhe der jeweiligen Erhebung 12 der ersten Art liegt zwischen 10 und 50 µm. Die abgrenzbaren Bereiche 14 bilden eine Art Clusterstruktur aus und die Bereiche 14 sind entlang von Verbindungslinien 18 im wesentlichen abstandsfrei voneinander in Anlage.

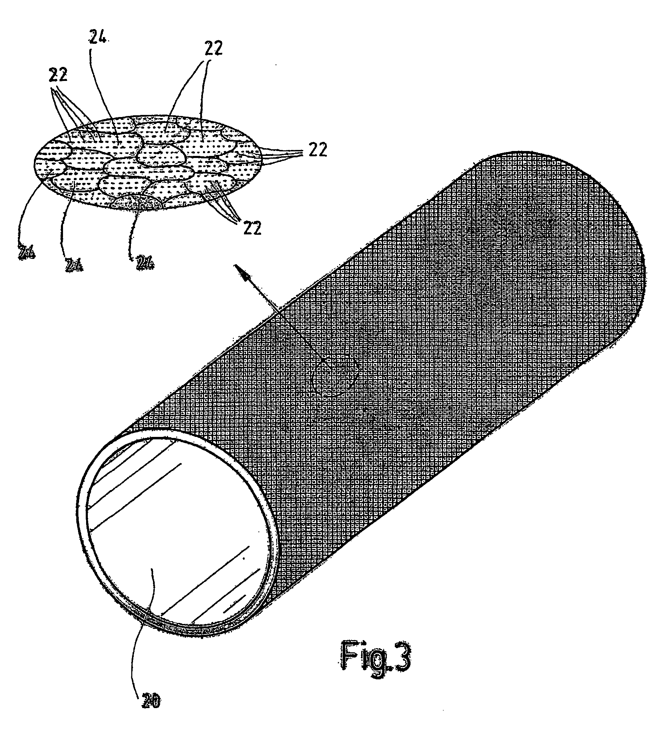

Zur Herstellung der vorstehend bezeichneten Oberfläche wird ein Herstellverfahren mit einer Strukturwalze 20 eingesetzt, wie sie in der Fig.3 in ihrem prinzipiellen Aufbau wiedergegeben ist. Mit der Formwalze 20 ist es möglich, die Oberfläche als Folien- oder Bandmaterial fortlaufend aus Kunststoff herzustellen, wobei die Strukturwalze 20 mit der ersten und zweiten Art von Erhebungen 12, 16 entsprechenden Vertiefungen 22 bzw. 24 versehen wird, in die die künstlich herstellbare Grundstruktur 10 für ihre Formgebung zunächst eindringt. In Blickrichtung auf die Fig.3 gesehen ist links oben ein vergrößerter Ausschnitt aus der Oberfläche der Strukturwalze 20 wiedergegeben, die die angesprochenen Vertiefungen 22,24 zeigt. Zum Herstellen der dahingehenden Vertiefungsstruktur für die Strukturwalze 20 dient vorzugsweise ein Sandstrahlverfahren, wobei mit im Durchmesser vergrößerten Strahlkörnern die größeren konkaven Vertiefungen 24 eingebracht werden, die später dem Herstellen der ersten Art an Erhebungen 12 dienen und mit einem Strahlgut kleineren Durchmessers lassen sich innerhalb der Vertiefungen 24 die weiteren Vertiefungen 22 einbringen, die später dem Herstellen der zweiten Erhebungen 16 dienen. Anstelle von Strahlgut mit verschiedenen Durchmessergrößen kann auch nur ein Strahlgut eingesetzt werden, das auf seiner Kornoberfläche mit Überständen versehen ist, die die Vertiefungen 22 für die Erhebungen 16 der zweiten Art bilden. Die dahingehenden Sandstrahlverfahren sind sehr kostengünstig und bieten die notwendige Genauigkeit für die späteren Erhebungsstrukturen der erfindungsgemäßen Oberfläche.

Die Strukturwalze 20 kann als Hohlzylinder ausgebildet sein und insbesondere beheizt werden, sofern das zu verarbeitende Kunststoffmaterial dies notwendig macht. Die Strukturwalze 20 bildet insbesondere mit einer weiteren Gegenhaltewalze (nicht dargestellt) einen Formgebungsspalt aus, durch den das Kunststoffmaterial durchtritt. In Abhängigkeit von der Breite und dem Durchmesser der Strukturwalze 20 lassen sich die gewünschten Oberflächen in beliebigen Längen und Breiten herstellen.

Die derart hergestellte Oberfläche läßt sich insbesondere für Gegenstände verwenden, um deren Verschmutzung zu verhindern, indem die Erhebungen 16 der zweiten Art derart dicht beieinander stehend angeordnet sind, daß die freien Abstände zwischen diesen Erhebungen 16 geringer sind als die durchschnittliche Größe der auf die Oberfläche auftretenden Verschmutzungspartikel.

Die zur Herstellung der Oberfläche für einen Gegenstand vorgesehenen Materialien können aus nachwachsenden Rohstoffen gebildet sein und sind vorzugsweise biologisch abbaubar. Einschlägige Vorschrift ist hier die DIN V 54900 und als besonders geeignet haben sich Polylactide für das Oberflächenmaterial erwiesen.

## Patentansprüche

1. Verfahren zur Herstellung einer Oberfläche für einen Gegenstand mit einer künstlichen Grundstruktur (10) mit einer ersten Art von Erhebungen (12) und einer zweiten Art von Erhebungen (16), wobei die Erhebung der jeweils gleichen Art benachbart zueinander angeordnet sind, wobei die benachbarten Erhebungen der ersten Art (12) abstandsfrei aneinanderstoßen, wobei die Erhebungen der ersten und zweiten Art (12,16) auf einer gemeinsamen, dem Gegenstand abgewandten Seite angeordnet sind und wobei die Erhebungen der zweiten Art (16) auf den Erhebungen der ersten Art (12) angeordnet sind, **dadurch gekennzeichnet, daß** die Oberfläche mittels einer Strukturwalze (20) als Folien- oder Bandmaterial fortlaufend hergestellt wird, die mit der ersten und zweiten Art von Erhebungen (12, 16) entsprechenden Vertiefungen (22,24) versehen wird, in die die künstlich herstellbare Grundstruktur (10) für ihre Formgebung eindringt und daß die Grundstruktur (10) aus einem hydrophilen Kunststoffmaterial gebildet wird.

2. Verfahren nach Anspruch 1, **dadurch gekennzeichnet, daß** das hydrophile Kunststoffmaterial der Grundstruktur (10) aus Polyvinylchlorid, Polyterephthalate, Polymethylmethacrylat oder aus Polyamid hergestellt wird.

3. Verfahren nach Anspruch 1 oder 2, **dadurch gekennzeichnet, daß** von der ersten Art (12) zapfenartig Erhebungen der zweiten Art (16) vorstehend ausgebildet werden, daß die jeweilige Erhebung (16) der zweiten Art mit einer Höhe kleiner als 5 µm, vorzugsweise zwischen 1,5 und 3 µm, ausgebildet wird, und daß der Abstand zwischen den Erhebungen (16) der zweiten Art ebenfalls kleiner als 5 µm, vorzugsweise 1 bis 3 µm, gewählt wird.

4. Verfahren nach Anspruch 3 oder 4, **dadurch gekennzeichnet, daß** vorgesehen wird, daß die von der Grundstruktur konvex erhabene Erhebung (12) der ersten Art eine Fläche auf der Grundstruktur (10) zwischen 20 und 300 µm einnimmt und daß die Höhe zwischen der Grundstruktur (10) und der Scheitelhöhe der jeweiligen Erhebung (12) der ersten Art zwischen 10 und 50 µm liegt.

5. Verfahren nach einem der Ansprüche 2 bis 4, **dadurch gekennzeichnet, daß** vorgesehen wird, daß von Erhebungen (12) der ersten Art gebildete abgrenzbare Bereiche (14) eine Clusterstruktur ausbilden.

## Claims

1. Process for producing a surface for an object with a synthetic base structure (10) with a first type of projections (12) and a second type of projections (16), whereby the projections of each respective type are arranged adjacent to one another, whereby the projections of the first and second type (12, 16) are arranged on a common side facing away from the object and whereby the projections of the second type (16) are arranged on the projections of the first type (12), **characterised in that** the surface is produced continuously as foil or strip material by means of a structured roller (20) which is provided with the depressions (22, 24) corresponding to the first and second type of projections (12, 16) into which the base structure (10), which can be synthetically produced, enters to be formed and that the base structure (10) is formed of a hydrophilic plastic material.

2. Process according to Claim 1, **characterised in that** the hydrophilic plastic material of the base structure (10) is made of polyvinyl chloride, polyterephthalate, polymethyl methacrylate or polyamide.

3. Process according to Claim 1 or 2, **characterised in that** pin-like projections of the second type (16) are formed protrudingly from the first type (12), that each respective projection (16) of the second type is formed to a height of less than 5 µm, preferably between 1.5 and 3 µm and that the distance between the projections (16) of the second type is also selected at less than 5 µm, preferably 1 to 3 µm.

4. Process according to Claim 3 or 4, **characterised in that** it is envisaged that the projection (12) of the first type rising convexedly from the base structure takes up a surface of between 20 and 300 µm on the base structure (10) and that the height between the base structure (10) and the apex of the respective projection (12) of the first type is between 10 and 50 µm.

5. Process according of one of the Claims 2 to 4, **characterised in that** it is envisaged that the delineable areas (14) formed by the projections (12) of the first type form a cluster structure.

## Revendications

1. Procédé de fabrication d'une surface pour un objet ayant une structure de base artificielle (10) avec un premier type de bosses (12) et un deuxième type de bosses (16), les bosses respectivement de même type étant disposées de façon mutuellement adjacente, les bosses adjacentes du premier type (12) se touchant sans intervalle, les bosses du premier et deuxième type (12, 16) étant disposées sur une face commune détournée de l'objet, et les bosses du deuxième type (16) étant disposées sur les bosses du premier type (12), **caractérisé en ce que** la surface est fabriquée en continu au moyen d'un cylindre structuré (20) sous la forme d'un matériau en feuille ou en bande, le cylindre étant muni de creux (22, 24) correspondant au premier et deuxième type de bosses (12, 16), creux dans lesquels entre la structure de base (10) à fabriquer artificiellement en vue de sa mise en forme, et **en ce que** la structure de base (10) est réalisée à partir d'une matière plastique hydrophile.

2. Procédé selon la revendication 1, **caractérisé en ce que** la matière plastique hydrophile de la structure de base (10) est fabriquée en chlorure de polyvinyle, polytérephtalate, polyméthylméthacrylate ou polyamide.

3. Procédé selon la revendication 1 ou 2, **caractérisé en ce que** des bosses du deuxième type (16) sont réalisées en faisant saillie à partir du premier type (12) comme des cônes, **en ce que** la bosse respective (16) du deuxième type est réalisée avec une hauteur inférieure à 5 µm, de préférence entre 1,5 et 3 µm, et **en ce que** la distance entre les bosses (16) du deuxième type est choisie également de préférence inférieure à 5 µm, de préférence de 1 à 3 µm.

4. Procédé selon la revendication 3 ou 4, **caractérisé en ce qu'**il est prévu que la bosse (12) du premier type, en relief convexe sur la structure de base occupe une surface sur la structure de base (10) entre 20 et 300 µm et que la hauteur entre la structure de base (10) et le point culminant de la bosse respective (12) du premier type se situe entre 10 et 50 µm.

5. Procédé selon l'une quelconque des revendications 2 à 4, **caractérisé en ce qu'**il est prévu que des zones (14) à délimiter, formées par les bosses (12) du premier type, constituent une structure en grappe.
